(19) Europäisches Patentamt
European Patent Office
Office européen des brevets

(11) **EP 2 636 239 B1**

(12) **EUROPEAN PATENT SPECIFICATION**

(45) Date of publication and mention
of the grant of the patent:
**07.08.2019 Bulletin 2019/32**

(51) Int Cl.:
***H04W 8/00*** *(2009.01)*   ***H04W 84/18*** *(2009.01)*
***H04W 92/18*** *(2009.01)*

(21) Application number: **11778879.4**

(22) Date of filing: **03.11.2011**

(86) International application number:
**PCT/EP2011/069335**

(87) International publication number:
**WO 2012/059544 (10.05.2012 Gazette 2012/19)**

(54) **A MARITIME MOBILE AD-HOC NETWORK**

MOBILES SEEFAHRZEUG-AD-HOC-NETZWERK

RÉSEAU AD HOC MOBILE MARITIME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2010 EP 10190062**

(43) Date of publication of application:
**11.09.2013 Bulletin 2013/37**

(73) Proprietor: **Thales Nederland B.V.
7550 GD Hengelo (NL)**

(72) Inventor: **LAARHUIS, Jan
7534 PA Enschede (NL)**

(74) Representative: **Lucas, Laurent Jacques
Marks & Clerk France
Conseils en Propriété Industrielle
Immeuble Visium
22, Avenue Aristide Briand
94117 Arcueil Cedex (FR)**

(56) References cited:
WO-A1-2006/098723   WO-A1-2009/015202
WO-A2-2004/095764   US-A1- 2004 077 379
US-A1- 2004 157 613   US-A1- 2005 076 054
US-A1- 2008 080 364   US-A1- 2010 128 695

• EMAD FELEMBAN ET AL: "SAND:
Sectored-Antenna Neighbor Discovery Protocol
for Wireless Networks", SENSOR MESH AND AD
HOC COMMUNICATIONS AND NETWORKS
(SECON), 2010 7TH ANNUAL IEEE
COMMUNICATIONS SOCIETY CONFERENCE
ON, IEEE, PISCATAWAY, NJ, USA, 21 June 2010
(2010-06-21), pages 1-9, XP031707840, ISBN:
978-1-4244-7150-8

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a mobile ad-hoc network. For example, the invention is particularly applicable to networking at sea, land or air.

Nowadays, lots of efforts are made to develop so-called Mobile Ad-hoc NETworks (MANET) with the following requirements:

> o spatial proximity: only nodes that are neighbours to each other, that is to say in line-of-sight to each other, or just beyond that, need to communicate;
> o spontaneous: nodes or sets of nodes may join and leave the network as they please;
> o mobility: nodes may move within the network without losing connectivity;
> o self-organizing: no manual interaction is needed when nodes connect to the network or maintain their connectivity.

The nodes of a true MANET are all peer nodes. This means that all the nodes implement exactly the same network features and that there is neither a base station among the nodes nor a network infrastructure outside the nodes. The majority of the world-wide development on MANET, such as the 802.11s SG of the Institute of Electrical and Electronics Engineers (IEEE), which extends the 802.11 family with meshing (i.e. ad-hoc) capabilities, and the MANET WG of the Internet Engineering Task Force (IETF), focuses on the urban areas where distances are relatively short and where there is much reflection. The products following, or preceding, the upcoming standards, especially their radio parts, therefore will be optimised for this urban area. In contrast, ad-hoc networking at sea usually involves much larger distances and there is hardly any reflection. Hence, the products, which are optimised for the urban area, can hardly be used successfully at sea.

The well-known SubNet Relay tries to achieve MANET at sea by use of existing UHF, VHF and even HF radios. However, the use of such radios, while appealing because they already exist on board ships, has lots of drawbacks when used for ad-hoc networking. A major drawback of SubNet Relay is that the use of the UHF/VHF/HF radios is in well-defined channels with a pre-defined usage. This causes interference with other users trying to use that channel and involves limitations to the available capacity. Another drawback of SubNet Relay in combination with omni-directionally radiating radios is the required co-ordination about channel usage among all neighbours, and the high power transmission to bridge the long distances. Yet another drawback of SubNet Relay is that HF radios, and to a lesser extent VHF radios, do not need meshing to reach all nodes in the network: instead all nodes in proximity can be reached directly.

Satellite communication is frequently mentioned as a possible technology to implement the requirements of ad-hoc networking at sea. There is, however, no current connectivity model supported by satellite that meets these requirements, nor is a suitable connectivity model expected in the future. The main problems are the absence of true multicast, the large propagation delays and the difficulty in meeting the spatial proximity requirement. Furthermore, a major drawback of satellite communication is that it implies high operational costs, which amount 50-75k€ per node per year when sensor data is continuously distributed. Also the dependency on a third party is not appealing for use in defence and security applications. When omni-directional satellite antennae are used, such as Iridium, eavesdropping is easy. When directional antennae are used, such as Inmarsat, the need for continuous alignment adds to the node's complexity, especially when nodes reside on swaying platforms.

According to document US 2005/076054 A1 an autonomous mobile network is established between mobile nodes configured as wireless autonomous robotic mobile access points. Each mobile node includes a mobility platform, an executable routing resource, and a standardized interface. Each network node preferably includes multiple wireless interfaces.

The invention is defined by independent network claim 1. Further embodiments are described in dependent claims 2-9. In the following, parts of the description and drawings referring to embodiments which are not covered by the claims are not presented as embodiments of the invention, but as examples useful for understanding the invention. The present invention aims to provide a MANET which may be used to overcome at least some of the technical problems described above, as defined by claim 1. A key to achieve ad-hoc networking at sea is to get rid of the power problem and the co-ordination problem the upcoming mesh solutions are faced with in a maritime environment. The invention proposes a MANET that achieves this goal by power bundling. Though power bundling can be implemented both interferometrically and by means of spatial diversity, only the latter solves both the power and co-ordination problem, because it avoids access of multiple nodes to the same radio channel. In the present patent application, the implementation of spatial diversity in a MANET according to the invention will be referred to as the Multi-Beam Antenna (MBA) approach. Due to its radically different approach, the MBA involves managing neighbourhood discovery and mobility in a different way than managed traditionally. In the present patent application, neighbourhood discovery and mobility management in a MANET according to the invention are both accomplished by a Distributed Neighbour Discovery (DND) process. A MANET according to the invention combines MBA approach with DND process so as to unite the previously deemed incompatible features of high capacity, high flexibility, self-organizing and self-healing communication. At its most general, the invention proposes a network comprising peer nodes only. The network comprises more than two mobile peer nodes. Each node comprises a plurality of wireless air interfaces and means for discovering neighbour peer nodes that are in line-of-sight, in the sense a given peer node can be reached by an RF signal transmitted via a trajectory that can be contained within the Fresnel zone between the node and a given peer node .

Disclosed is that each means for discovering neighbour peer nodes may establish, when said means discover that the local node neighbours a distant node, a dedicated link between an air interface of the local node and an air interface of the said distant node, said link not being shared with and accessible by other peer nodes.

According to the invention each air interface comprises components as defined in claim 1, the air interfaces being arranged as specified in claim 1.

For example, each air interface may comprise a chip set from the 802.11 family.

Preferably, each means for discovering neighbour peer nodes may comprise means for autonomously managing radio paths, means for managing links co-operatively with neighbour peer nodes, a link being an association between two peer nodes, and means for managing routes, a route being a concatenation of links.

Preferably, the means for autonomously managing radio paths may comprise first means for selecting, for each neighbour node with an air interface of which at least one radio path has been established by a local air interface, the radio path having the strongest signal strength among all the established radio paths with that neighbour. The means for autonomously managing radio paths may also preferably comprise second means for selecting, among the already selected radio paths and for each local air interface being associated in more than one of the already selected radio paths, the valid radio path having the strongest signal strength. The means for autonomously managing radio paths may also preferably comprise means for deleting the established radio paths except the valid radio paths.

In a preferred embodiment, the first and the second means for selecting a radio path may include means for handling a path matrix, which may be such that each row corresponds to an air interface of the local node, such that each column corresponds to an air interface of a neighbour node and such that each non-zero element is the strength of a valid radio path that associates an air interface of the local node with an air interface of a neighbour node.

In a preferred embodiment, the means for managing links co-operatively with neighbour peer nodes may comprise means for exchanging with neighbour peer nodes 1-hop links including their 1-hop connection capacity $c^{(1)}$, each 1-hop link corresponding to a valid radio path. The means for managing links co-operatively with neighbour peer nodes may also comprise means for computing the 2-hop connection capacity $c^{(2)}$ between the neighbour peer nodes. The means for managing links co-operatively with neighbour peer nodes may also comprise means for deleting the 1-hop links of which 1-hop connection capacities $c^{(1)}$ are less than the 2-hop connection capacities $c^{(2)}$ of the corresponding 2-hop links.

In a preferred embodiment, the means for exchanging 1-hop link may include means for handling a link matrix, which may be such that each row and each column correspond to the local node or a neighbour node and such that each element is the 1-hop connection capacity $c^{(1)}$ of a link that associates two neighbour peer nodes.

In a preferred embodiment, the means for computing the 2-hop connection capacity $c^{(2)}$ between the neighbour peer nodes may include means for computing $c^{(2)} = (\sum_{i=1,2} 1/c^{(1)}_i + \zeta/M)^{-1}$, where M is the size of a packet and $\zeta$ is the packet routing delay.

For example, each node may be born by a maritime platform.

Thus, a further advantage of a MANET according to the invention in any of its aspects is that the MBA approach achieves inherent scalability of the network in terms of number of nodes and aggregate capacity. It also makes eavesdropping difficult, due to localization of emitted radiation to the intended recipients only. It is worth noting that the MBA approach obtains these advantages without sacrificing the inherent advantages of MANETs such as flexibility, self-healing and self-organization.

Examples and embodiments of the invention are described below with reference to the accompanying drawings in which:

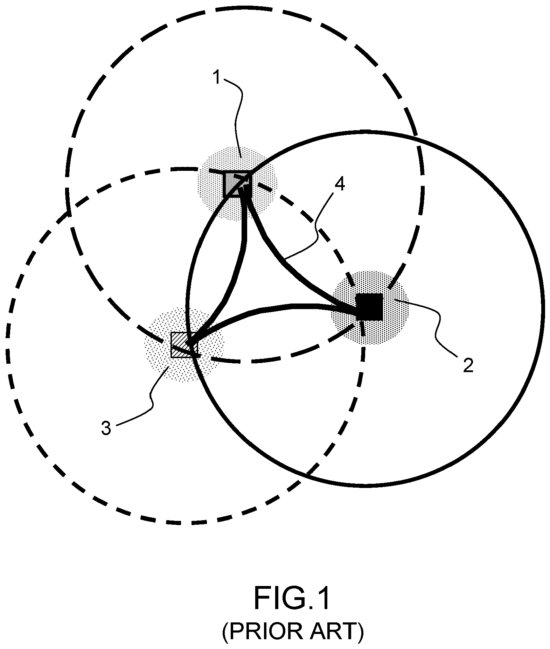

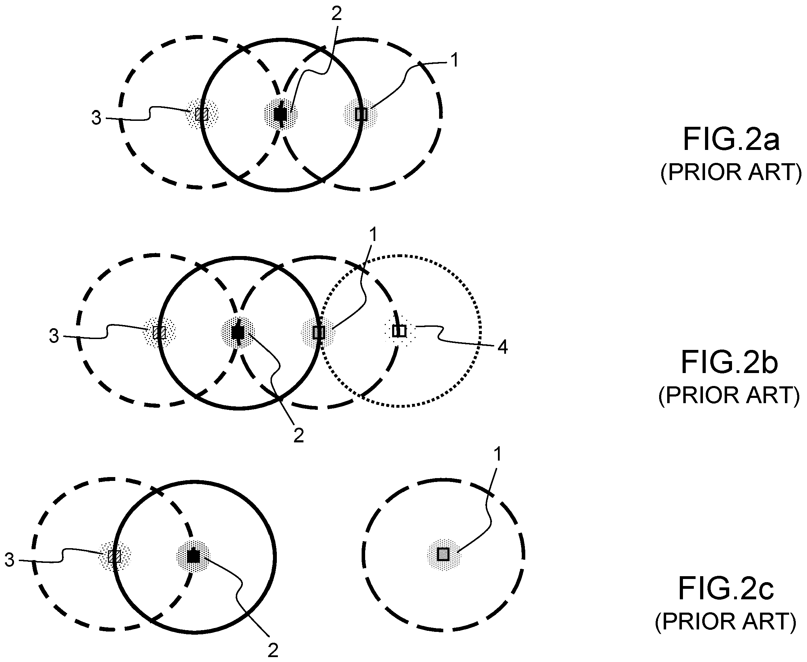

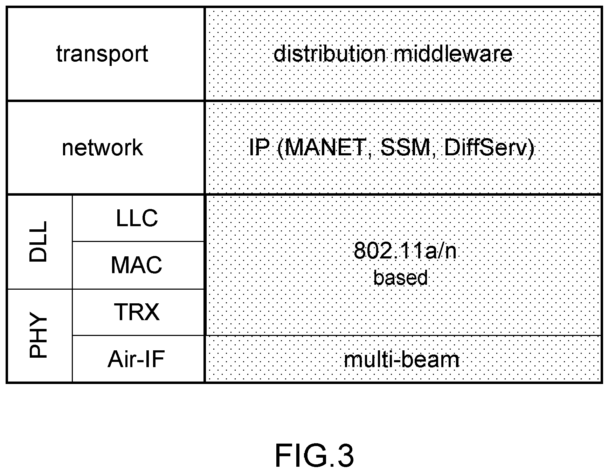

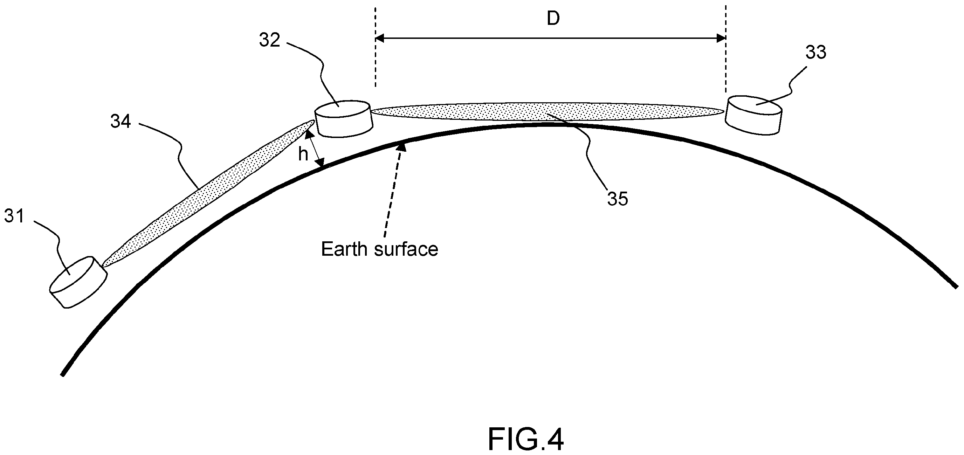

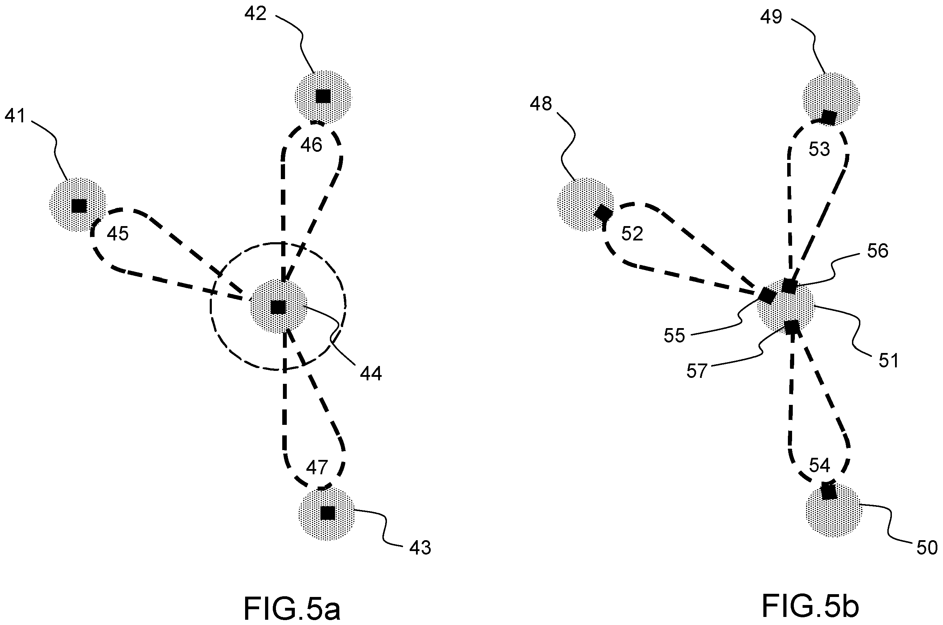

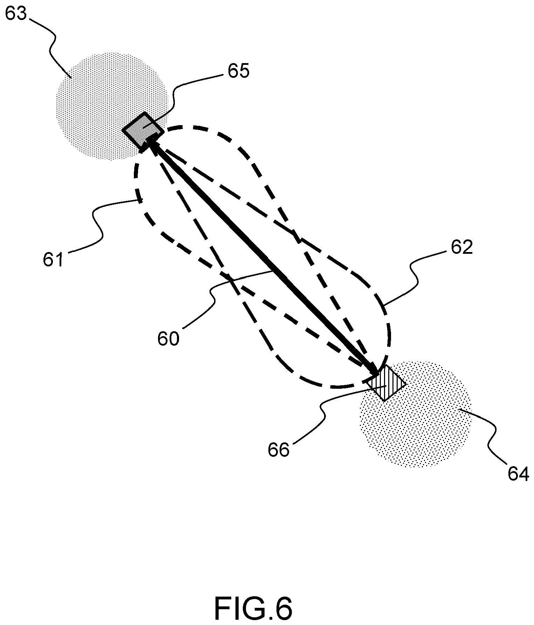

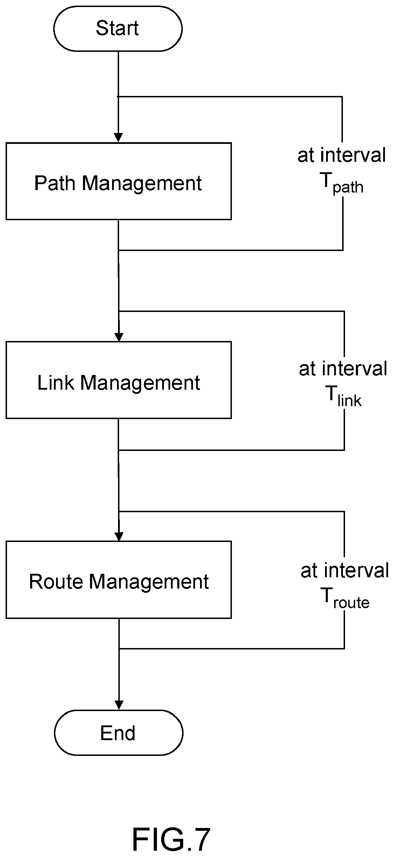

◦ Figure 1, by a top view, an illustration of three disc-shaped nodes comprising one omni-directional wireless interface according to the prior art;
◦ Figures 2a, 2b and 2c, by top views, illustrations of some particular co-ordination problems faced by MAC protocols for wireless networks according to the prior art;
◦ Figure 3, by a diagram, an illustration of an exemplary protocol stack up to the transport layer according to the invention;
◦ Figure 4, by a perspective view, an illustration of the deployment of ad-hoc networks in a naval environment;
◦ Figures 5a and 5b, by top views, illustrations of two ways of bundling energy, Figure 5b illustrating the preferred way according to the invention;
◦ Figure 6, by a top view, an illustration of the establishment of a dedicated link according to the invention;
◦ Figure 7, by a diagram, an illustration of an exemplary distributed neighbour discovery process according to the invention;

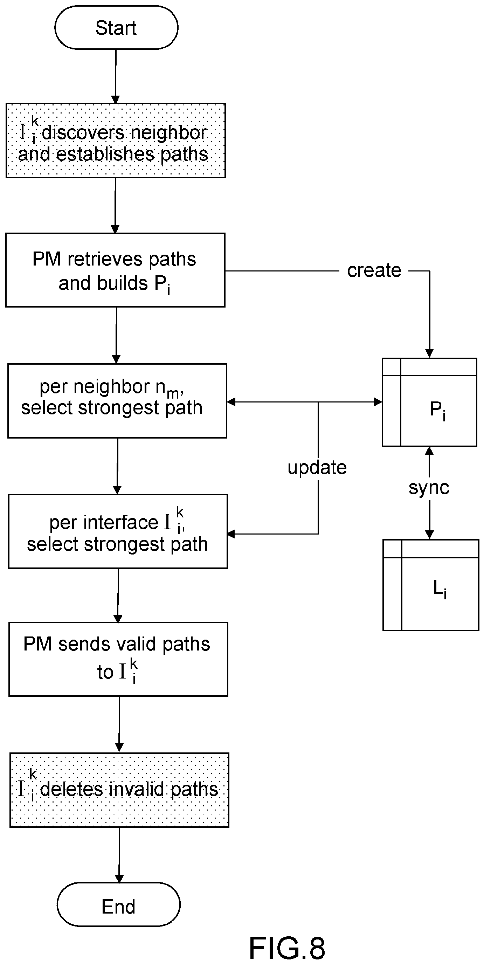

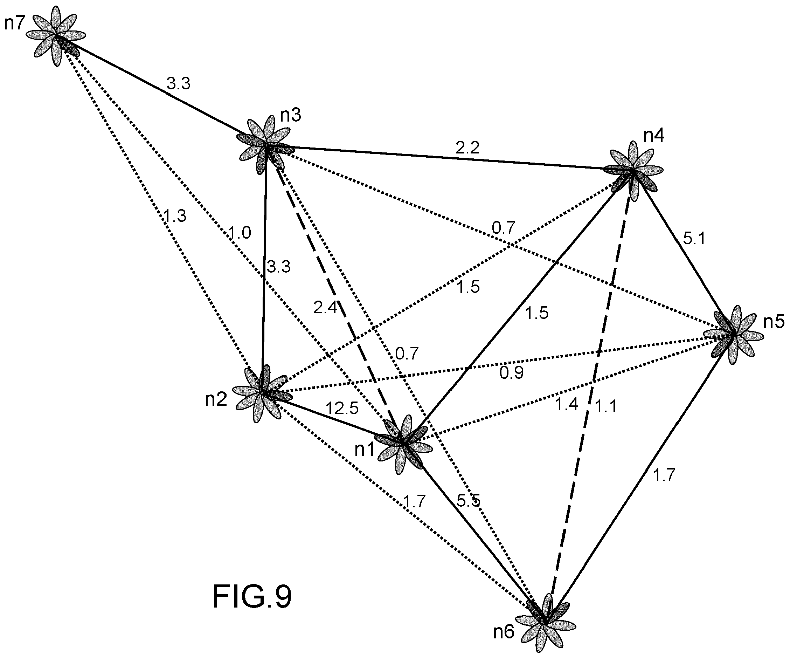

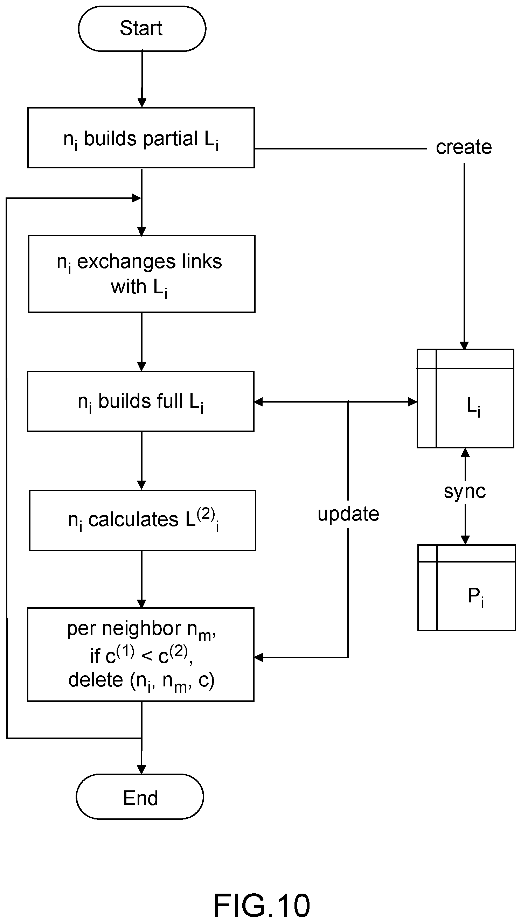

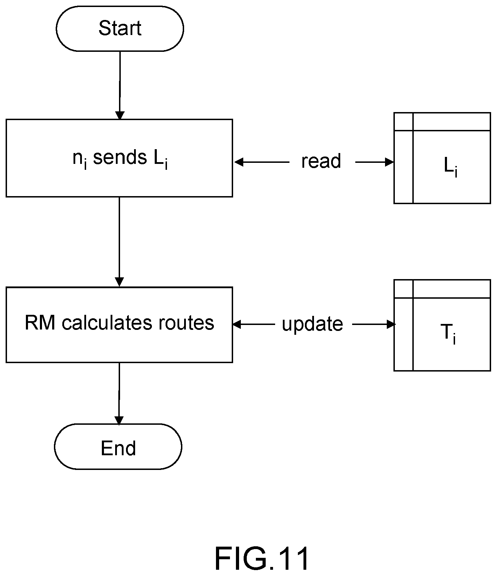

◦ Figure 8, by a diagram, an illustration of an exemplary step of path management according to the invention;
◦ Figure 9, by a diagram, an illustration of an example of establishment of links between nodes according to the invention;
◦ Figure 10, by a diagram, an illustration of an examplary step of link management according to the invention;
◦ Figure 11, by a diagram, an illustration of an examplary step of Route Management according to the invention.

In the figures, like reference signs are assigned to like items.

MANETs have been studied and specified by the standards bodies IETF and IEEE for over a decade. Both bodies tacitly assume one or more omni-directional wireless interfaces and that all nodes of the MANET together form an IP-subnet.

The IETF has focused on the routing protocols that are able to capture dynamic topologies caused by node movement. The result is a large variety of MANET routing protocols, each tailored to a specific network type and specific dynamism of its topology. The 802.11s task group of the IEEE has focused on the specific Medium Access Control (MAC) mechanisms and protocols that are required for co-ordination between neighbouring nodes in wireless mesh networks. These MAC mechanisms are far more complex than the current MAC mechanisms specified for use within Wireless Local Area Networks (WLAN). On top of the MAC, the IEEE defines the routing protocols, for which it has borrowed suitable concepts from the IETF. There is one fundamental difference in the two approaches. The IETF performs the routing at IP-layer and abstracts, as usual, from the lower MAC and radio layers. The IEEE, on the other hand, solves the routing at the link-layer and includes the MAC processing and radio transmission. The IEEE approach is compatible with standard IP-forwarding in an IP-subnet: all nodes in the MANET can be reached in one IP-hop. The IETF approach, on the other hand, violates this rule, due to the need for more than one IP-hop to reach all nodes. To repair this, each of the IP-protocols (mostly routing) that suffer from it needs to be modified.

Despite the efforts in IETF and IEEE, there are still no mature MANET products available in the market. These products, especially the radios contained in them, i.e. the receivers and the transmitters, have been optimized for use in urban environments in order to counter performance-degrading multi-path transmissions. However, depending on the intended environment, the conditions of transmission may differ. For example, it is described hereafter an exemplary MANET according to the invention intended for maritime environment. Indeed, the invention has been designed in the context of the maritime area. However, it is to be understood that application in other operational areas, such as land and air, are not excluded. To understand the design decision made for the present exemplary maritime MANET according to the invention, a closer look at the peculiarities of radio transmission in classical MANETs is needed.

Figure 1 illustrates by a top view three disc-shaped nodes 1, 2 and 3, each node comprising one omni-directional wireless interface represented by a centred square. A dashed circle represents the radio coverage of each node for successful communication of messages. The three nodes 1, 2 and 3 together form a multi-access link 4 represented by a pseudo-triangle. The three nodes 1, 2 and 3 must co-ordinate their access to the multi-access link 4 prior to data transmission. According to the prior art, this is the task of the well-known MAC protocol. When all nodes 1, 2 and 3 have data to send, each node roughly gets one-third of the available radio capacity, but in practice this is considerably less due to the MAC overhead. In general, the more nodes are attached to a multi-access link, the less capacity is available per node. In other words, classical MANET is not scalable in capacity. Indeed, MAC protocols for wireless networks are faced with some particular co-ordination problems as illustrated by Figures 2a, 2b and 2c.

Figures 2a illustrates the hidden node problem that can occur in both WLAN and MANET. In case of a WLAN, the node 2 is the base station and the nodes 1 and 3 are at opposite sites of the base station 2 such that their respective radio coverages do not overlap. When the node 1 tries to send to the base station 2, the node 3 cannot overhear that transmission and mistakenly decides the medium is free. If the node 1 starts a transmission to the base station 2, it will collide with the transmission of the node 3. In WLAN, this problem is solved by introducing a request-to-send (RTS), clear-to-send (CTS) and acknowledge (ACK) handshake. The node 1 sends a RTS to the base station 2, and the base station 2 responds with a CTS to indicate it is ready to start communication. The node 3 can hear the latter and, consequently, will refrain from sending until the ACK from the base station 2 marks the end of the subsequent data transmission. Though it solves the hidden node problem, using this handshake in classical MANETs introduces the exposed node problem illustrated by Figure 2b.

By virtue of the above described handshake mechanism, there could have been simultaneous collision-free transmissions from the node 3 to the node 2 and from a node 4 to the node 1. However, applying the RTS/CTS exchange results in reception by the node 2 of a CTS sent by the node 1 or *vice versa,* which prohibits transmissions between the node 3 and the node 2. So transmissions are unnecessarily delayed and capacity is unnecessarily spoiled.

Yet another co-ordination problem in wireless networks is the unaware node problem illustrated by Figure 2c. Carrier sensing in WLAN occurs at both the physical level (detecting an RF carrier) and at logical level (detecting transmitted messages). If either is sensed the node considers the medium busy and refrains from transmitting. The physical carrier sense is, however, far more sensitive than the logical carrier sense. This may cause a distant node, in this case the node 1, to refrain from communication because it senses the carrier of node 2, even if the transmission of messages would not collide with the transmitted messages of the node 2 that sent the sensed carrier. The unaware node problem is a severe throughput limitation in classical MANETs.

Thus, it can be concluded that the prior art approaches to MANETs require more sophisticated MAC mechanisms than WLANs do, and that they do not form a scalable solution to MANETs. In the following, it is described how the present exemplary maritime MANET according to the invention overcomes these limitations, especially by combination of the MBA approach with the DND process.

As illustrated by Figure 3, the present exemplary maritime MANET according to the invention defines a specific protocol stack up to transport layer. The layers of the well-known ISO-OSI protocol reference model are shown in the left column. For convenience, the maritime MANET is divided into three parts: a distribution middleware sub-system at the transport layer, an ad-hoc IP sub-system at the network layer and a transmission sub-system at the Data Link Layer and PHYsical layer.

At the PHY layer, the illustrated protocol stack comprises an antenna solution optimized for the naval environment. For the DLL layer, existing 802.11a or 802.11n solutions are used, which implies that the complex MAC protocols required for classical MANETs is not needed. At IP network layer, an appropriate ad-hoc routing protocol is used in combination with other IP capabilities needed that are MANET capability, SSM capability and DiffServ capability. On top of this IP network layer resides a distribution middleware sub-system as described in the European patent application number EP10152278.7 previously filed by the applicant, of which purpose is to provide interconnection between application processes. The latter patent application describes an IP sub-system and a distribution middleware sub-system, which are both suitable for implementing, respectively, the IP network layer and the transport layer of the present exemplary maritime MANET according to the invention.

It is worth noting that the transmission sub-system illustrated by Figure 3 provides a solution for Line-of-Sight (LOS) communication between peer nodes. For Beyond Line-of-Sight (BLOS) communication, which may be needed when LOS communication does not provide a connected network anymore, an alternative wireless technology based on HF-radios and Near Vertical Incidence Skywave antennas may be used.

Used in ad-hoc network situations, the architecture of a MBA solves the power problem and allows solutions for the co-ordination problem. It also allows integration of COTS (Common Off The Shelf) radio chip sets and customized antennas. Used in conjunction with a MBA, the DND process includes in particular:

- o the path management: an essential mechanism to achieve dedicated links and as such getting rid of the complex MAC protocol for ad-hoc networks; it also accommodates relative movement between neighbours, including both translational and rotational movements;
- o the link management: an improvement of the connectivity of the network by avoiding weaker links; it is also seamless and easy to integrate with standard IP-routing.

As illustrated by Figure 4, the deployment of ad-hoc networks in a naval environment differs in many aspects from deployment of ad-hoc networks in an urban environment, for which upcoming MANET products have been optimised. First, multi-path transmission at sea hardly occurs, except for specular reflection of the sea itself. Second, the transmission distances required at sea are much longer. That is why, in order to minimize the number of peer nodes required, peer nodes 31, 32 and 33 being represented by cylindrical hardware modules, and therefore to minimize the overall system cost, the peer nodes may be deployed at a certain height above the sea level so as to skim over the horizon to a sufficiently distant neighbouring peer node. Preferably the peer nodes 31, 32 and 33 may be Ad-hoc Distribution modules as those described in the European patent application number EP10152280.3 previously filed by the applicant. A typical distance of $D \approx 20\text{-}25$ kilometers between neighbouring peer nodes 32 and 33 is foreseen at heights of $h \approx 15m$. A third difference concerns the deployment of neighbours. On Figure 4, the node 31 and the node 32 are 1-hop neighbours, as only one transmission path 34 is needed between those two nodes. Similarly, the node 32 and the node 33 are 1-hop neighbours, as only one transmission path 35 is needed between those two nodes. However, the node 31 and the node 33 are 2-hop neighbours, as the two transmission paths 34 and 35 are needed between those two nodes. Figure 4 clearly shows that 2-hop neighbours, for example the peer nodes 31 and 33, are always behind the horizon. This avoids the unaware node problem that plagues classical MANETs.

These differences render upcoming COTS MANET products useless in the naval environment. This is why a radically different approach is taken for the transmission sub-system of the present exemplary maritime MANET according to the invention. Among others, this sub-system comprises:

- ○ means of bundling the emitted electro-magnetic energy, so as to solve the power problem;
- ○ means of getting rid of the multi-access related coordination problems (e.g. hidden node, exposed node, unaware node), so as to avoid the need for complex MAC mechanisms and allow the use of cheap and reliable 802.11 wireless chip sets.

By virtue of these means, the present exemplary maritime MANET according to the invention is rendered scalable in capacity, as it is explained in the following.

Appropriate bundling of electro-magnetic energy results in the creation of beams directing towards neighbouring peer nodes. Energy bundling improves the signal-to-noise ratio at the receiving node and therefore enables larger transmission distances. A secondary, but not less valuable, advantage of energy bundling is to make eavesdropping more difficult. After all, this can only be done when the adversary is in between neighbouring peer nodes, where he is easily detected. However, energy bundling also introduces new requirements. First, since peer nodes may move relative to each other, both translation and rotation of peer nodes being possible, a node must be able to keep a beam on the peer nodes it is connected with. Second, a node must be able to periodically operate omni-directional to discover peer nodes arriving in its neighbourhood.

Figures 5a and 5b illustrate two ways of bundling energy. Figure 5a shows how it can be achieved between four peer nodes 41, 42, 43 and 44 by means of beam forming. In this case, a single wireless air interface per node is used with an interferometric antenna, each interface being represented by a centred square. The interferometric antenna can be a circular array of monopoles. For example, by applying the correct phases to the individual monopoles of the antenna of the node 44, a radiation pattern results with beams 45, 46 and 47 towards the neighbouring peer nodes 41, 42 and 43 respectively. This solution solves the power problem, but still requires a complex MAC mechanism because there is a multi-access link, and consequently co-ordination for transmissions between the nodes 41, 42, 43 and 44 is required. As illustrated in Figure 5a by a dashed circle, neighbourhood discovery still requires omni-directional transmission, which suffers from the power problem we just solved by beam forming.

Figure 5b illustrates an alternative MBA approach between four peer nodes 48, 49, 50 and 51. This is the MBA approach according to the invention. Instead of one wireless interface per node, there are multiple wireless air interfaces per node. An air interface is an integrated element comprising an antenna and a radio (i.e. an RF receiver, an RF transmitter and control electronics for setting up a connection with a neighbouring peer interface). For example, three interfaces 55, 56 and 57 of the node 51 are each represented by a square and have each a directional radiation pattern 52, 53 and 54 respectively. Despite not depicted on Figure 5b for the sake of clarity, there are in fact many more interfaces than the maximum number of neighbours, so as to provide full 360° angular coverage. Thus, while only a few interfaces are engaged in a link with neighbours, all other interfaces perform neighbourhood discovery, which in this case is not suffering from the power problem. Moreover, neighbourhood may thus be discovered whatever the relative locations of the peer nodes. Neighbourhood discovery results in establishing dedicated links with neighbours.

Figure 6 illustrates the establishment of a dedicated link 60 by virtue of beams 61 and 62 of interfaces 66 and 65 respectively of neighbouring peer nodes 63 and 64 respectively. Because the link 60 is dedicated, there is no need for the complex MAC protocol as in classical MANET. Therefore, the radio of each interface can be based on the cheap, proven chip sets from the 802.11 family. The transmission capacity of such radios is available for each interface, meaning that the present exemplary maritime MANET according to the invention is scalable in its capacity.

As a conclusion, it can be stated that the MBA approach according to the invention obeys all three design principles for a transmission sub-system of a maritime MANET : it solves the power problem by means of energy bundling, it gets rid of the complex MAC by avoiding multi-access links and it enables the use cheap and reliable 802.11 wireless chip sets.

Typically, a large number N of interfaces, N≈20 for example, may be used for each node, while only a few, for example less than 6, may be used simultaneously. Then the -3dB beamwidth of an interface may equal 360/N, so that adjacent beams may cross at their -3dB point. The antenna of each interface may preferably be realized by a patch array based on well-known PCB technologies, resulting in the desired beamwidths. The interfaces, each interface comprising an antenna and a radio featuring control electronics, are integrated within an Ad-hoc Distribution module. The antennas are arranged at the circumference of the module. The radio of an interface may preferably be realized by an existing 802.11a/n/g chip set connected to a computer. A so-implemented air interface is particularly cheap.

However, the aforementioned MBA approach can only operate properly when dedicated links are established between peer nodes. Such establishment is achieved when unambiguous decisions are made regarding which interface of each node to participate in a link and which node pairs establish a link. These aspects are taken care of in the neighbourhood discovery process that takes care of the joining, moving and leaving of peer nodes in the network as well.

Figure 7 illustrates by a diagram an overview of the DND process according to the invention. Each node implements one DND process, which communicates with and co-ordinates all air interfaces of the MBA, and with the peer DND processes at neighbour peer nodes. In the following, it is assumed that each node comprises N radio interfaces, where N≈20 for example. For the description of the DND process, the following definitions are needed:

- a radio interface $I_i^k$ of a node $n_i$, where $k \leq N$, is the physical sub-system comprising a transmitter, a receiver and an antenna;
- a radio path $(I_i^k, I_j^m, p)$ is an association between the interface $I_i^k$ of the node $n_i$ and an interface $I_j^m$ of a neighbour peer node $n_j$, where $m \leq N$, the radio path being characterised by the strength p of the corresponding RF signal;

- a link $(n_i, n_j, c^{(1)})$ is an association between neighbour peer nodes $n_i$ and $n_j$, characterised by its 1-hop connection capacity $c^{(1)}$;
- a route is a concatenation of links between a source node and a destination node.

The neighbourhood discovery process according to the invention typically comprises the following steps in the order:

  ◦ a step of Path Management performed at interval $T_{path}$, said step establishing radio paths such that:

    ▪ the interface with the strongest radio path to a neighbour is selected;
    ▪ per interface the strongest radio path is selected.

  ◦ a step of Link Management performed at interval $T_{link}$, said step establishing links between peer nodes such that when multiple links to a node exist, only the one with the higher capacity is maintained;
  ◦ a step of Route Management performed at interval $T_{route}$, said step most likely being an existing pro-active ad-hoc routing protocol, possibly modified to take advantage of the radio metrics of the links.

Figure 8 illustrates by a diagram the step of Path Management according to the invention. The path management is a non-collaborative operation performed individually within each node. It may advantageously be implemented as a software module.

In a first step, the radio interface $I_i^k$ discovers neighbours and establishes paths. This is performed autonomously by the interface $I_i^k$, based on the capabilities of the 802.11 chip set or any other radio chip when used.

In a second step, the previously established paths are retrieved and a path matrix is created. Assuming that only the peer nodes $n_1$, $n_2$, $n_3$ and $n_4$ are neighbouring the node $n_i$, and thus implicitly assuming that $i \neq 1$, $i \neq 2$, $i \neq 3$ and $i \neq 4$, an exemplary partial path matrix $P_i$ may be highlighted in the bold frame of the table below:

| $P_i$ | | n1 | | | n2 | | n3 | | n4 |
|---|---|---|---|---|---|---|---|---|---|
| | | m=3 | m=4 | m=5 | m=1 | m=2 | m=4 | m=5 | m=2 |
| $n_i$ | k-1 | $p_{k-1,1}$ | $p_{k-1,2}$ | $p_{k-1,3}$ | $p_{k-1,4}$ | $p_{k-1,5}$ | $p_{k-1,6}$ | $p_{k-1,7}$ | $p_{k-1,8}$ |
| | k | $p_{k,1}$ | $p_{k,2}$ | $p_{k,3}$ | $p_{k,4}$ | $p_{k,5}$ | $p_{k,6}$ | $p_{k,7}$ | $p_{k,8}$ |
| | k+1 | $p_{k+1,1}$ | $p_{k+1,2}$ | $p_{k+1,3}$ | $p_{k+1,4}$ | $p_{k+1,5}$ | $p_{k+1,6}$ | $p_{k+1,7}$ | $p_{k+1,8}$ |

In the above bold frame, the path matrix $P_i$ models all paths from the node $n_i$ to neighbour peer nodes $n_1$, $n_2$, $n_3$ and $n_4$. The interfaces of the node $n_i$ make up the rows, while the interfaces of the neighbours, grouped per peer node $n_1$, $n_2$, $n_3$ and $n_4$, make up the columns. Each element p of the matrix $P_i$ is the strength of the corresponding radio path. For example, the element $p_{k-1,1}$ is the strength of the radio path $(I_i^{k-1}, I_1^3, p_{k-1,1})$.

In a third step, for each of the neighbour peer node $n_1$, $n_2$, $n_3$ and $n_4$, the strongest path is selected i.e. the path whose strength p is maximum. However, this may result in an interface $I_i^k$ of the node $n_i$ to be selected several times.

That's the reason why, in a forth step, the strongest path is selected per interface $I_i^k$ that has been selected at the previous step, i.e. the valid path whose strength is maximum, so as to ensure that each interface $I_i^k$ of the node $n_i$ is selected only once.

In a fifth step, each interface $I_i^k$ of the node $n_i$ that has been selected at the third step is issued path-delete messages for deleting the invalid paths. Thus, only the valid paths selected at the forth step are remaining.

The above described path management process is repeated every $T_{path}$ seconds. This means that each $T_{path}$ seconds, the path matrix is updated.

Then, links are created from remaining valid paths as described below.

In Figure 8, the blocks executed by the radio chip have been colored in grey, while the blocks executed by the DND process have been left transparent.

Figure 9 illustrates an example of how the DND process may establish links between nodes. In this example, there are only seven nodes $n_1$, $n_2$, $n_3$, $n_4$, $n_5$, $n_6$ and $n_7$ and only seven beams per node just for illustration purposes. When an interface of a node is active, the corresponding beam is colored dark grey in Figure 9. When interfaces are idle, the corresponding beams are shown in light grey. The solid lines between the nodes are the paths that are used, for example the path between the node $n_2$ and the node $n_3$. The numbers along the lines indicate the strength of the path in arbitrary units.

Figure 9 illustrates, by dotted lines between the nodes, paths that have been deleted by path management because it is not the strongest path in a beam. These dotted lines are collectively treated. For example, the path between the node $n_3$ and the node $n_5$ is deleted because the same beam of node $n_3$ has a stronger path to node $n_4$.

Figure 10 illustrates by a diagram the step of Link Management according to the invention. The link management is a collaborative operation, which is distributed among direct neighbour peer nodes. It may advantageously be implemented as a software module. A (wireless) link is an association between peer nodes, while a (radio) path is an association between interfaces. The distinction between paths and links is useful: when a node needs to track a neighbour, either due to relative translation or relative rotation with respect to each other, the paths may change but the links do not.

The reach between all the peer nodes of the present exemplary maritime MANET according to the invention may be modelled by a matrix $R^{(n)}$. When all links are bi-directional, which is assumed, then $R^{(n)}$ is a symmetric, irreflexive, homogeneous relation between the peer nodes. For the link management process a similar reachability relation is needed between the nodes of the 1-hop neighbourhood of a node $n_i$. This relation is called the link matrix $L^{(n)}_i$, of which use is explained in the three step process described later. In case of the 1-hop reachability the link matrix is simply denoted $L_i$. The element $(j,m) = (m,j)$ of $L_i$ is the capacity of the link between the node j and the node m. It is worth noting that the link matrix $L_i$ must be consistent with the path matrix $P_i$ and must remain so. For example, $L_i$ and $P_i$ are both based on the same set of neighbour peer nodes $n_1$, $n_2$, $n_3$, $n_4$, $n_5$, $n_6$ and $n_7$. The consistency between $L_i$ and $P_i$ is maintained by virtue of a synchronization process, which is illustrated on Figures 8 and 10.

An exemplary homogeneous link matrix for node $n_i$ is derived from the exemple network shown in Figure 9. As shown in the figure 9, nodes $n_2$, $n_3$, $n_4$ and $n_6$ form the 1-hop neighbourhood of node $n_1$. The link matrix $L_1$ is consistent with the previous exemplary path matrix $P_i$ and is highlighted in the bold frame of the table below:

| $L_1$ | n1 | n2 | n3 | n4 | n6 |
|---|---|---|---|---|---|
| n1 | 0 | 12.5 | 2.4 | 1.5 | 5.5 |
| n2 | 12.5 | 0 | 3.3 | 0 | 0 |
| n3 | 2.4 | 3.3 | 0 | 2.2 | 0 |
| n4 | 1.5 | 0 | 2.2 | 0 | 1.1 |
| n6 | 5.5 | 0 | 0 | 1.1 | 0 |

Each element of the matrix $L_1$ is the 1-hop connection capacity $c^{(1)}$ of the corresponding link in arbitrary units, but may be in megabits per second (Mbps) for real implementations. In the absence of a valid radio path between the nodes $n_2$ and $n_4$, between the nodes $n_2$ and $n_6$ and between the nodes $n_3$ and $n_6$, the 1-hop connection capacities of the corresponding link is zero.

In a first step, the node $n_i$ creates a new set of links based on the valid paths contained in the latest path matrix $P_i$. Then it creates a new link matrix $L_i$ and fills row i and column i these new links. Node $n_i$ cannot fill in the other elements since it doesn't know the capacities of the corresponding links, yet.

In a second step, the node $n_i$ sends the newly defined links to all nodes in its new 1-hop neighbourhood. Similarly, node $n_i$ receives from all nodes in its new 1-hop neighbourhood their new links.

In a third step, the node $n_i$ has sufficient information to fill in the missing elements in the link matrix $L_i$.

Now, the n-hop reach of the node $n_i$ within its 1-hop neighbourhood may be modelled by a matrix $L_i^{(n)}$, where the capacities of the elements are the composed n-hop connection capacity $c^{(n)}$ of the n concatenated links:

$$c^{(n)} = \left( \Sigma_{i=1..n}\ 1/c^{(1)}_i + (n-1)^* \zeta/M \right)^{-1}$$

where M is the size of a packet and $\zeta$ is the packet routing delay. For the Link Management according to the invention, up to n=2 is sufficient.

In a fourth step, node $n_i$ calculates $L^{(2)}_i$. The elements in this matrix denote the capacities of the 2-hop path between two nodes in the 1-hop neighbourhood of node $n_i$. An exemplary link matrix $L^{(2)}_1$ is highlighted in the bold frame of the table below:

| $L^{(2)}_1$ | n1 | n2 | n3 | n4 | n6 |
|---|---|---|---|---|---|
| n1 | 0 | 1.4 | 2.6 | 1.1 | 0.6 |
| n2 | 1.4 | 0 | 2.0 | 1.3 | 3.8 |
| n3 | 2.6 | 2.0 | 0 | 0.9 | 1.7 |

(continued)

| $L^{(2)}_1$ | n1 | n2 | n3 | n4 | n6 |
|---|---|---|---|---|---|
| n4 | 1.1 | 1.3 | 0.9 | 0 | 1.2 |
| n6 | 0.6 | 3.8 | 1.7 | 1.2 | 0 |

In a fifth step, the node $n_i$ compares the 1-hop connection capacity $c^{(1)}$ with the 2-hop connection capacity $c^{(2)}$ for all nodes in its 1-hop neighbourhood. If $c^{(2)}$ is higher than $c^{(1)}$ for a node $n_j$, then the node $n_i$ updates $L_1$ by deleting the link $(n_i, n_j, c^{(1)})$ and corresponding radio path as well.

Figure 11 illustrates by a diagram the step of Route Management according to the invention. It may advantageously be implemented as a software module. It is similar to classical route management.

In a first step, the node $n_i$ sends its valid links to all other nodes in the network using any primitive forwarding capability available in the network.

In a second step, the node $n_i$ calculates the routes so as to update its routing table $T_i$, which specifies the next hop for each destination node. Then, the next hop is mapped to the appropriate path. Link state routing is assumed.

Figure 9 illustrates, by dashed lines between the node $n_1$ and the node $n_3$ and between the node $n_4$ and the node $n_6$, examplary paths that have been deleted as a consequence of the link management. These dashed lines are treated individually. As can be seen in the figure 9, the strength of the path from the node $n_1$ to the node $n_3$ is less than the composite strength from the node $n_1$ to the node $n_3$ via the node $n_2$. Notice that despite deleting paths, the network is connected, i.e. each node is able to reach all other nodes.

It is important noticing that, in the present exemplary maritime MANET according to the invention, all the nodes are peer nodes with regard to the network features. They implement the same Multi-Beam Antenna (MBA) approach and the same Distributed Neighbour Discovery (DND) process in the same way exactly. There is neither a base station among the nodes nor a network infrastructure outside the nodes.

It is also important understanding that the so-formed MANET according to the invention is scalable in capacity. Indeed, as there are many more wireless interfaces per node than there are peer nodes likely to neighbour said node, therefore the capacity of each communicating node does not decrease when it establishes a dedicated link with a newly neighbouring node. On the contrary, the capacity of the newly added link is added to the overall network capacity.

A further advantage of the invention is that it is particularly cheap to implement, as it is based on the well-tried PCB technology, on COTS radio chip sets and on software modules.

A further advantage of the invention is that all radiating elements being positioned at the circumference of a cylindrical hardware module, EMI problems inside this module are minimized.

The primary operational area is the maritime area and the invention has been designed in the context of this area. However, application in other operational areas, such as land and air, are not excluded. In the maritime area, the peer nodes will be born on stationary or moving platforms, which can be buoys, navy vessels, commercial ships or unmanned vehicles. The height of the peer node on these platforms determines the line-of-sight with other peer nodes, and therefore determines the above mentioned spatial proximity. The typical, but not exclusive, application domains for which the invention is tailored to, are defense and security.

## Claims

1. A network comprising a plurality of peer nodes (n1, n2, n3, ...), which are distribution modules and represented by cylindrical hardware modules, each peer node (n1, n2, n3, ...) comprising a plurality of wireless air interfaces, each air interface comprising:

   - a directional antenna transmitting and receiving beams of electro-magnetic energy,
   - a radiofrequency transceiver,
   - means for discovering neighbours, a neighbour of a peer node (n1, n2, n3, ...) being defined as a peer node (n1, n2, n3, ...) in line of sight,
   - means for establishing radio paths with air interfaces of discovered neighbours,
   wherein said plurality of air interfaces of each peer node (n1, n2, n3, ...) are arranged at the circumference of the distribution module in such a manner that the beams of the directional antennas cover a full 360-degree angle.

2. A network according to Claim 1, **characterized in that** the means for discovering neighbours comprise:

- means for autonomously managing radio paths at an interval $T_{path}$, configured for establishing radio paths;
- means for managing, at an interval $T_{link}$, links co-operatively with neighbours, a link being an association between two peer nodes (n1, n2, n3, ...);
- means for managing routes at an interval $T_{route}$, a route being a concatenation of links.

3. A network according to any of preceding claims, **characterized in that** each air interface comprises a chip set from the IEEE 802.11 standards family relating to wireless local area networks.

4. A network according to Claim 2, **characterized in that** the means for autonomously managing radio paths comprise:

- first means for selecting, for each neighbour with an air interface with which at least one radio path has been established by a local air interface, the radio path having the strongest signal strength among all the established radio paths with that neighbour;
- second means for selecting, among the already selected radio paths and for each local air interface being associated in more than one of the already selected radio paths, a valid radio path as the selected radio path having the strongest signal strength;
- means for deleting the established radio paths except the valid radio paths.

5. A network according to Claim 4, **characterized in that** the first and the second means for selecting a radio path include means for handling a path matrix ($P_i$) of a peer node (ni), which is such that:

- each row corresponds to an air interface of the peer node (ni);
- each column corresponds to an air interface of a neighbour;
- each non-zero element is the strength of a selected radio path that associates an air interface of the peer node (ni) with an air interface of a neighbour peer node (n1, n2, n3, ...).

6. A network according to Claim 2, **characterized in that** the means for managing links co-operatively with neighbours comprise:

- means for exchanging with neighbours 1-hop links including their 1-hop connection capacity $c^{(1)}$, each 1-hop link corresponding to a selected radio path;
- means for computing the 2-hop connection capacity $c^{(2)}$ between the neighbours;
- means for deleting the 1-hop links of which 1-hop connection capacities $c^{(1)}$ are less than the 2-hop connection capacities $c^{(2)}$ of the corresponding 2-hop links.

7. A network according to Claim 6, **characterized in that** the means for exchanging 1-hop link include means for handling a link matrix ($L_i$) of a peer node (ni), which is such that:

- each row and each column correspond to the peer node (ni) or one of its neighbours;
- each element is the 1-hop connection capacity of a link that associates two neighbour peer nodes (n1, n2, n3, ...).

8. A network according to Claim 6, **characterized in that** the means for computing the 2-hop connection capacity between the neighbours include means for computing $c^{(2)} = (\sum_{i=1,2} 1/c^{(1)}_i + \zeta/M)^{-1}$, where M is the size of a packet and $\zeta$ is the packet routing delay.

9. A network according to any of the preceding claims, **characterized in that** each peer node (n1, n2, n3, ...) is born by a maritime platform.


**Patentansprüche**

1. Netzwerk, umfassend eine Vielzahl von Partnerknoten (n1, n2, n3, ...), die Verteilungsmodule sind und durch zylindrische Hardwaremodule repräsentiert werden,
jeder Partnerknoten (n1, n2, n3, ...) umfassend eine Vielzahl von drahtlosen Luftschnittstellen, jede Luftschnittstelle umfassend:

- eine Richtantenne, die Strahlen elektromagnetischer Energie überträgt und empfängt,
- einen Funkfrequenz-Sender/Empfänger,

- Mittel zum Entdecken von Nachbarn, wobei ein Nachbar eines Partnerknotens (n1, n2, n3, ...) als ein Partnerknoten (n1, n2, n3, ...) in Sichtlinie definiert ist,
- Mittel zum Einrichten von Funkwegen mit Luftschnittstellen von entdeckten Nachbarn,

wobei die Vielzahl von Luftschnittstellen jedes Partnerknotens (n1, n2, n3, ...) am Umfang des Verteilungsmoduls in einer derartigen Weise angeordnet ist, dass die Strahlen der Richtantennen einen vollständigen Winkel von 360 Grad abdecken.

2. Netzwerk nach Anspruch 1, **dadurch gekennzeichnet, dass** die Mittel zum Entdecken von Nachbarn umfassen:

- Mittel zum autonomen Verwalten von Funkwegen in einem Intervall $T_{path}$, konfiguriert zum Einrichten von Funkwegen;
- Mittel zum kooperativen Verwalten, in einem Intervall $T_{link}$, von Verknüpfungen mit Nachbarn, wobei eine Verknüpfung eine Assoziation zwischen zwei Partnerknoten (n1, n2, n3, ...) ist;
- Mittel zum Verwalten von Routen in einem Intervall $T_{route}$, wobei eine Route eine Verkettung von Verknüpfungen ist.

3. Netzwerk nach einem der vorstehenden Ansprüche, **dadurch gekennzeichnet, dass** jede Luftschnittstelle einen Chipsatz aus der Familie der Standards IEEE 802.11 in Bezug auf drahtlose Nahbereichsnetzwerke umfasst.

4. Netzwerk nach Anspruch 2, **dadurch gekennzeichnet, dass** die Mittel zum autonomen Verwalten von Funkwegen umfassen:

- erste Mittel zum Auswählen, für jeden Nachbarn mit einer Luftschnittstelle, mit der mindestens ein Funkweg durch eine lokale Luftschnittstelle eingerichtet wurde, des Funkwegs mit der stärksten Signalstärke unter den eingerichteten Funkwegen mit diesem Nachbarn;
- zweite Mittel zum Auswählen, unter den bereits ausgewählten Funkwegen und für jede lokale Luftschnittstelle, die in mehr als einem der bereits ausgewählten Funkwege assoziiert ist, eines gültigen Funkwegs als den ausgewählten Funkweg mit der stärksten Signalstärke;
- Mittel zum Löschen der eingerichteten Funkwege außer den gültigen Funkwegen.

5. Netzwerk nach Anspruch 4, **dadurch gekennzeichnet, dass** die ersten und die zweiten Mittel zum Auswählen eines Funkwegs Mittel zum Handhaben einer Wegmatrix ($P_i$) eines Partnerknotens (ni) enthalten, die derart ist, dass:

- jede Reihe mit einer Luftschnittstelle des Partnerknotens (ni) korrespondiert;
- jede Spalte mit einer Luftschnittstelle eines Nachbarn korrespondiert;
- jedes Element ungleich null die Stärke eines ausgewählten Funkwegs ist, der eine Luftschnittstelle des Partnerknotens (ni) mit einer Luftschnittstelle eines Nachbar-Partnerknotens (n1, n2, n3, ...) assoziiert.

6. Netzwerk nach Anspruch 2, **dadurch gekennzeichnet, dass** die Mittel zum kooperativen Verwalten von Verknüpfungen mit Nachbarn umfassen:

- Mittel zum Austauschen von 1-Sprung-Verknüpfungen mit Nachbarn einschließlich ihrer 1-Sprung-Verbindungskapazität $c^{(1)}$, wobei jede 1-Sprung-Verknüpfung mit einem ausgewählten Funkweg korrespondiert;
- Mittel zum Berechnen der 2-Sprung-Verbindungskapazität $c^{(2)}$ zwischen den Nachbarn;
- Mittel zum Löschen der 1-Sprung-Verknüpfungen, von denen 1-Sprung-Verbindungskapazitäten $c^{(1)}$ kleiner als die 2-Sprung-Verbindungskapazitäten $c^{(2)}$ der korrespondierenden 2-Sprung-Verknüpfungen sind.

7. Netzwerk nach Anspruch 6, **dadurch gekennzeichnet, dass** die Mittel zum Austauschen von 1-Sprung-Verknüpfungen Mittel zum Handhaben einer Verknüpfungsmatrix ($L_i$) eines Partnerknotens (ni) enthalten, die derart ist, dass:

- jede Reihe und jede Spalte mit dem Partnerknoten (ni) oder einem seiner Nachbarn korrespondieren;
- jedes Element die 1-Sprung-Verbindungskapazität einer Verknüpfung ist, die zwei Nachbar-Partnerknoten (n1, n2, n3, ...) assoziiert.

8. Netzwerk nach Anspruch 6, **dadurch gekennzeichnet, dass** die Mittel zum Berechnen der 2-Sprung-Verbindungskapazität zwischen den Nachbarn Mittel zum Berechnen von $c^{(2)} = (\sum_{i=1,2} 1/c^{(1)}_i + \zeta/M)^{-1}$ enthalten, wobei M die Größe eines Pakets ist und $\zeta$ die Paketwegsteuerungsverzögerung ist.

**9.** Netzwerk nach einem der vorstehenden Ansprüche, **dadurch gekennzeichnet, dass** jeder Partnerknoten (n1, n2, n3, ...) von einer maritimen Plattform getragen wird.

**Revendications**

**1.** Réseau comprenant une pluralité de noeuds homologues (n1, n2, n3, ...) qui sont des modules de distribution et sont représentés par des modules matériels cylindriques, chaque noeud homologue (n1, n2, n3, ...) comprenant une pluralité d'interfaces radio sans fil, chaque interface radio comprenant :

- une antenne directionnelle émettant et recevant des faisceaux d'énergie électromagnétique,
- un émetteur-récepteur de radiofréquences,
- des moyens de découverte de voisins, un voisin d'un noeud homologue étant défini comme un noeud homologue (n1, n2, n3, ...) situé dans la ligne de vue,
- des moyens pour constituer des trajets radio avec les interfaces radio des voisins découverts,

dans lequel ladite pluralité d'interfaces radio de chaque noeud homologue (n1, n2, n3, ...) sont agencées à la circonférence du module de distribution de telle manière que les faisceaux des antennes directionnelles couvrent un angle complet de 360 degrés.

**2.** Réseau selon la revendication 1, **caractérisé en ce que** les moyens de découverte de voisins comprennent :

- des moyens pour gérer de façon indépendante des trajets radio à un intervalle $T_{path}$, configurés pour constituer des trajets radio,
- des moyens pour gérer, à un intervalle $T_{link}$, des liaisons en coopération avec des voisins, une liaison étant une association entre deux noeuds homologues (n1, n2, n3, ...), et
- des moyens pour gérer des routes à un intervalle $T_{route}$, une route étant une concaténation de liaisons.

**3.** Réseau selon l'une des revendications précédentes, **caractérisé en ce que** chaque interface radio comprend une série de puces conforme à la norme IEEE 802.11 relative aux réseaux locaux sans fil.

**4.** Réseau selon la revendication 2, **caractérisé en ce que** les moyens pour gérer indépendamment les trajets radio comprennent :

- des premiers moyens pour sélectionner, pour chaque voisin comportant une interface radio avec laquelle au moins un trajet radio a été constitué par une interface radio locale, le trajet radio ayant l'intensité de signal la plus élevée parmi les trajets radio constitués avec ce voisin,
- des seconds moyens pour sélectionner, parmi les trajets radio déjà sélectionnés et pour chaque interface radio locale associée dans plus d'un des trajets radio déjà sélectionnés, un trajet radio valide en tant que trajet radio sélectionné présentant l'intensité de signal la plus élevée, et
- des moyens pour supprimer les trajets radio constitués à l'exception des trajets radio valides.

**5.** Réseau selon la revendication 4, **caractérisé en ce que** les premiers et les seconds moyens pour sélectionner un trajet radio incluent des moyens pour utiliser une matrice de trajet $(P_i)$ d'un noeud homologue (ni), qui est telle que :

- chaque ligne correspond à une interface radio du noeud homologue (ni),
- chaque colonne correspond à une interface radio d'un voisin, et
- chaque élément non nul représente l'intensité d'un trajet radio sélectionné qui associe une interface radio du noeud homologue (ni) à une interface radio d'un noeud homologue voisin (n1, n2, n3, ...).

**6.** Réseau selon la revendication 2, **caractérisé en ce que** les moyens pour gérer des liaisons en coopération avec des voisins comprennent :

- des moyens pour échanger avec des voisins des liaisons à un saut incluant leur capacité de connexion à un saut $c^{(1)}$, chaque liaison à un bond correspondant à un trajet radio sélectionné,
- des moyens pour calculer la capacité de connexion à deux sauts $c^{(2)}$ entre les voisins, et
- des moyens pour supprimer les liaisons à un saut dont les capacités de connexion à un saut $c^{(1)}$ sont inférieures

aux capacités de connexion à deux sauts $c^{(2)}$ des liaisons à deux sauts correspondantes.

**7.** Réseau selon la revendication 6, **caractérisé en ce que** les moyens pour échanger des liaisons à un saut comprennent des moyens pour utiliser une matrice de liaison ($L_i$) d'un noeud homologue (ni), qui est telle que :

- chaque ligne et chaque colonne correspondent au noeud homologue (ni) ou à un de ses voisins,
- chaque élément représente la capacité de connexion à un saut d'une liaison qui associe deux noeuds homologues voisins (n1, n2, n3, ...).

**8.** Réseau selon la revendication 6, **caractérisé en ce que** les moyens pour calculer la capacité de connexion à deux sauts entre les voisins incluent des moyens pour calculer $c^{(2)} = (\sum_{i=1,2} 1/c^{(1)}{}_i + \zeta/M)^{-1}$, où M est la taille de paquet et $\zeta$ est le retard de routage de paquets.

**9.** Réseau selon l'une quelconque des revendications précédentes, **caractérisé en ce que** chaque noeud homologue (n1, n2, n3,...) est porté par une plate-forme maritime.

FIG.1
(PRIOR ART)

FIG.2a
(PRIOR ART)

FIG.2b
(PRIOR ART)

FIG.2c
(PRIOR ART)

EP 2 636 239 B1

| transport | distribution middleware |
|---|---|
| network | IP (MANET, SSM, DiffServ) |
| DLL — LLC | 802.11a/n based |
| DLL — MAC | 802.11a/n based |
| PHY — TRX | 802.11a/n based |
| PHY — Air-IF | multi-beam |

FIG.3

FIG.4

EP 2 636 239 B1

FIG.5a

FIG.5b

EP 2 636 239 B1

FIG.6

Start

Path Management

at interval
$T_{path}$

Link Management

at interval
$T_{link}$

Route Management

at interval
$T_{route}$

End

FIG.7

```
                    ┌─────────────┐
                    │    Start    │
                    └─────────────┘
                           │
                           ▼
         ┌──────────────────────────────┐
         │ $I_i^k$ discovers neighbor    │
         │ and establishes paths         │
         └──────────────────────────────┘
                           │
                           ▼
         ┌──────────────────────────────┐        create        ┌──────────┐
         │   PM retrieves paths          │──────────────────────│    Pᵢ    │
         │   and builds $P_i$            │                      │          │
         └──────────────────────────────┘                      └──────────┘
                           │
                           ▼
         ┌──────────────────────────────┐
         │   per neighbor $n_m$,         │◄───────────────────►    Pᵢ
         │   select strongest path       │
         └──────────────────────────────┘                       sync
                           │                      update
                           ▼
         ┌──────────────────────────────┐
         │   per interface $I_i^k$,      │◄────────────────         Lᵢ
         │   select strongest path       │
         └──────────────────────────────┘
                           │
                           ▼
         ┌──────────────────────────────┐
         │   PM sends valid paths        │
         │   to $I_i^k$                  │
         └──────────────────────────────┘
                           │
                           ▼
         ┌──────────────────────────────┐
         │ $I_i^k$ deletes invalid paths │
         └──────────────────────────────┘
                           │
                           ▼
                    ┌─────────────┐
                    │     End     │
                    └─────────────┘
```

FIG.8

FIG.9

FIG.10

```
            ┌─────────┐
            │  Start  │
            └─────────┘
                 │
                 ▼
      ┌────────────────────┐          ┌──────┐
      │                    │◄── read ──►│      │
      │    n_i sends L_i   │          │  L_i │
      │                    │          └──────┘
      └────────────────────┘
                 │
                 ▼
      ┌────────────────────┐          ┌──────┐
      │                    │◄── update ──►│     │
      │ RM calculates routes│          │  T_i │
      │                    │          └──────┘
      └────────────────────┘
                 │
                 ▼
            ┌─────────┐
            │   End   │
            └─────────┘
```

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005076054 A1
- EP 10152278 A
- EP 10152280 A